# EUROPÄISCHE PATENTSCHRIFT

(11) **EP 1 913 420 B1**
(45) Veröffentlichungstag und Bekanntmachung des Hinweises auf die Patenterteilung: **25.05.2011**
(21) Anmeldenummer: 06776514.9
(22) Anmeldetag: 29.07.2006
(51) Int. Cl.: G01S 17/08

(54) **VERFAHREN ZUR LICHTLAUFZEITMESSUNG**
METHOD FOR LIGHT PROPAGATION TIME MEASUREMENT
PROCEDE DE MESURE DU TEMPS DE PROPAGATION DE LA LUMIERE

(30) Priorität: 29.07.2005 DE 102005036354; 27.09.2005 DE 102005045993
(43) Veröffentlichungstag der Anmeldung: 23.04.2008
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2006/007549
(87) Internationale Veröffentlichungsnummer: WO 2007/012501

(56) Entgegenhaltungen:
- DE-A1- 10 001 955
- DE-A1- 10 022 054
- DE-A1- 10 133 823
- DE-A1- 10 322 552
- DE-B3- 10 300 223

## Beschreibung

Die Erfindung betrifft ein Verfahren und eine Vorrichtung zur Lichtlaufzeitmessung, insbesondere für Kameras nach dem Oberbegriff der Ansprüche 1 und 6.

In vielen Anwendungsbereichen muss die Entfernung eines Bezugsobjektes zu anderen Objekten bestimmt werden. Ein derartiger Einsatzbereich sind vor allem Kamerasysteme, z.B. auch im Fahrzeugbereich oder im Bereich der Robotik.

Hierbei ergibt sich nach dem Stand der Technik folgende Problematik: Legt man an eine Leuchtdiode eine gepulste Spannung an, so leuchtet sie im Rhythmus dieser angelegten Spannung. Ein reflektierender Gegenstand kann die abgestrahlte Lichtleistung zu einer Photodiode vorzugsweise in der Nähe der sendenden LED reflektieren. Das zurückgeworfene Signal ist in seiner Größe abhängig von der Sendeleistung der LED, dem Reflexionsgrad des Gegenstandes und dem Abstand des Gegenstandes von der sendenden LED. Bei einem Abstand eines reflektierenden Gegenstandes z.B. einer Hand, von z.B. einem Meter, der Verwendung einer handelsüblichen LED mit z.B. 100mA Pulsstrom, einem Öffnungswinkel von z.B. 15° und einer handelsüblichen Low-Cost Photodiode, z.B. BPW 34 von Osram, ergibt sich ein durch die Reflexion an der Hand hervorgerufener Photostrom von z.B. einigen µA in der Photodiode. Dieser Photostrom verändert sich natürlich mit dem Abstand des reflektierenden Gegenstandes, sodass er bei Entfernungen von größer einem Meter möglicherweise nur noch einige pA in der Photodiode beträgt. Um die Entfernung des reflektierenden Gegenstandes zu messen, bietet sich zwar eine Laufzeitmessung zwischen gesendetem und empfangenem Signal an, jedoch ist es bei den oben genannten sehr kleinen Empfangsströmen in der Photodiode sehr schwierig, den genauen Eintreffpunkt zu ermitteln.

Erschwerend kommt hinzu, dass das eintreffende Signal in der Photodiode bzw. den angeschlossenen Verstärkern nicht die Flankensteilheit erzeugt, mit der es ausgesandt wurde. Die Photodiode wirkt als Tiefpass, insbesondere wenn sie zur Erhöhung der Empfindlichkeit groß (große Empfangsfläche) gewählt wird. Die Lichtlaufzeit liegt bei etwa 15 cm Abstand bei etwa 1 ns. Aufgrund des Tiefpassverhaltens von oben genannter Photodiode und Vorverstärker kann die Anstiegszeit des Empfangssignals durchaus 10 µs betragen. Auch die sendende LED hat eine merkliche Anstiegszeit, jedoch liegt sie um Größenordnungen unter dem Tiefpassverhalten von Low-Cost Photodioden. Sie liegt üblicherweise im Bereich von 5 bis 10 ns und wird in der weiteren Beschreibung nicht berücksichtigt.

Das Detektieren des genauen Eintreffzeitpunktes des Reflexionssignals bereitet somit erhebliche Schwierigkeiten, und es beschäftigen sich viele Patentanmeldungen eben mit der Verbesserung der Detektion des genauen Eintreffzeitpunktes des Reflexionssignals.

Allgemein ist bekannt, dass sich größere Reflexionsabstände auf diesem Wege leichter bestimmen lassen, z.B. einige 10 bis 100 m. Weiterhin ist eine Messung ab ca. 3 m bis 250m einfacher als eine Messung im Nahfeld von 0 bis 3m, bei der mit ns-Genauigkeit gemessen werden muss, was wiederum Photodioden und Verstärker im GHz-Bereich nötig macht. Erschwerend kommt noch Fremdlicht, Temperatur und der jeweilige Reflexionsgrad des zu messenden Objekts hinzu. Diese Parameter gehen in der Regel stark in die Entfemungsmessung ein. Dabei werden aber in der Praxis oft ganz erhebliche Sendeleistungen (z.B. Laser, gepulst 10 W) eingesetzt. Wäre der Zeitpunkt des Empfangssignals genau bestimmt, tritt ein weiterer ungewollter Effekt auf. Zusätzliches Fremdlicht in der Photodiode verändert etwas die Amplitude und die Anstiegszeit des Empfangssignals, sodass auch die Entfernungsmessung durch Fremdlicht beeinflusst werden kann.

Eine Möglichkeit zur Entfernungsmessung ist die Messung der Lichtlaufzeit zwischen einem Lichtstrahlung aussendenden Sender, einem diese Lichtstrahlung reflektierenden Objekt und einem Empfänger. Aufgrund der hohen Lichtgeschwindigkeit und der gewünschten Genauigkeit der Messung wird heutzutage mit extrem schnellen Verstärkern und bewusst klein gewählten Photodioden gearbeitet, die mit einer hohen Frequenz von z.B. 100 MHz betrieben werden können.

Aus der DE 100 22 054 A1 ist ein optischer Distanzsensor bekannt, bei dem die Phasenverschiebung zwischen Sende- und Empfangslichtstrahlen zur Entfemungsmessung herangezogen wird. Dazu wird das Empfangssignal mit einer Mindestamplitude zusammen mit der Spannung eines Oszillators einem Synchrongleichrichter zugeführt. Es wird also ein aus der Lichtstrecke stammendes Signal mit einem rein elektrisch übermittelten Signal den Eingängen des Synchrongleichrichters zugeführt. Das am Ausgang des Synchrongleichrichters anstehende Ausgangssignal wird durch Ansteuerung eines Verzögerungsglieds so lange bis zu einem Vorzeichenwechsel geregelt, bis der Mittelwert der beiden Signale am Ausgang etwa Null wird. Dabei hat der Synchrongleichrichter die Aufgabe, das Signal sehr präzise in die Phasen zu zerlegen. Bauteilbedingte Verzögerungen, Alterungs- und Temperatureinflüsse werden gesondert referenziert und kompensiert. Selbst bei Verwendung einer Referenzlichtstrecke erfolgt die Regelung elektrisch durch Beeinflussung des Verzögerungsglieds. Einem klassischen Synchrongleichrichter wird damit das Photodiodensignal und das rein elektrisch übertragene Signal um 90° bzw. 270° versetzt zur Phasendetektion zugeführt. Dazu sind die Signale vor dem Synchrongleichrichter ungleich Null sein, der Mittelwert etwa zu Null werden kann, mit dem Ziel die jeweiligen Signalabschnitte des empfangenen Signals_gleich lang zu halten

Aus der WO 01/90778 A1 ist ferner ein Verfahren zur Entfemungsmessung durch Laufzeitmessung bekannt, wobei das Sendesignal und das am Empfänger anliegende Empfangssignal mit dem selben Takt angesteuert werden. Die so ermittelten Ansteuersignale werden mittels eines Phasenschiebers so verschoben, dass die Entfemungsabweichung zwischen der durch die Laufzeitmessung bestimmten Entfernung zum Zielobjekt und der tatsächlichen Entfernung minimal wird. Ziel ist die Abtastpunkte mit der Laufzeit bei hohen Frequenzen zu optimieren.

Aus der EP 706 648 B1 ist es bekannt, Lichtsignale unter Kompensation äußerer Einflüsse wie Fremdlicht-, Temperatur- oder Alterungseinflüsse zwischen Lichtsender und Lichtempfänger zu erfassen. Die Lichtsender werden über einen Taktgenerator zeitabschnittsweise und wechselweise betrieben. Das in der Amplitude wenigstens einer Lichtstrecke geregelte Licht wirkt gegebenenfalls mit dem Licht eines weiteren Lichtsender wie z.B. einer Kompensationslichtquelle so auf den Lichtempfänger ein, dass ein Empfangssignal ohne taktsynchrone Signalanteile entsteht. Das Empfangssignal des Lichtempfängers wird einem Synchrondemodulator zugeführt, der das Empfangssignal wiederum in die den beiden Lichtquellen entsprechende Signalkomponenten zerlegt. Diese werden in einem Vergleicher miteinander verglichen, wobei ohne Fremdlichtanteile ein einem Nullzustand entsprechendes Signal entsteht. Liegt am Ausgang des Vergleichers kein diesem Nullzustand entsprechendes Signal an, wird die Strahlungsleistung, die den Lichtquellen zugeführt wird, dahingehend geregelt, bis dieser Zustand erreicht ist. (siehe auch DE 10001455 A1)

Aus der DE 103 22 552 A1 ist es bekannt, die an einem Objekt reflektierte Lichtstrahlung sowie die Lichtstrahlung aus einer zweiten Lichtstrecke, die von einem weiteren Sender oder einer Kompensationslichtquelle stammt, parallel oder winkelgleich dem Empfänger zuzuleiten. Wird nämlich Licht von einer Lichtquelle einerseits von vorne in die Photodiode eingestrahlt und von einer weiteren Lichtquelle seitlich eingekoppelt, so nimmt die Anstiegszeit bei einem Pulsstrom im Lichtsignal bei seitlicher Einkopplung deutlich zu. Damit hat Fremdlicht bei seitlicher Einkopplung einen wesentlich größeren Einfluss. Der bei vollständiger Kompensation entstehende dimensionslose Punkt auf der Lichtintensitäts-Photostromkennlinie wird damit wieder zu einer Fremdlichteinflüssen unterliegenden Strecke auf der Kennlinie der Photodiode. Optimal ist daher ein gleicher Einfallswinkel für das Empfangs- und das Kompensationssignal.

Aus der DE 101 33 823 A1 ist eine optoelektronische Vorrichtung zur Positions- und Bewegungserfassung bekannt, die als Touchpad dient.

Aus der DE 103 00 223 B3 ist eine Messanordnung mit Fremdlichtkompensation sowie ein Verfahren zur phasenkorrekten Kompensation eines Signals bekannt.

### Offenbarung der Erfindung

Ausgehend von diesem Stand der Technik liegt der vorliegenden Erfindung die Aufgabe zugrunde, ein Verfahren zur Lichtlaufzeitmessung zu schaffen, das insbesondere bei Kameras auch mit günstigeren Bauelementen und niederfrequenteren Verstärkern arbeiten kann.

Diese Aufgabe wird durch ein Verfahren mit den Merkmalen des Anspruches 1 und eine Vorrichtung mit den Merkmalen des Anspruches 6 gelöst.

Dem Empfänger werden getaktete Signale von wenigstens zwei Sendern zugeleitet, die Lichtquellen oder Kompensationslichtquellen z.B in Form von LEDs sind. Die Lichtquelle sendet das Licht zu einem Objekt, dessen Entfernung/Reflexion bestimmt werden soll. Das reflektierte Licht wird zum Empfänger geleitet. Die Kompensationslichtquelle sendet das Licht aus einem festgelegten Abstand direkt in den Empfänger. Die Empfangssignale der Lichtquelle und der Kompensationslichtquelle werden miteinander verglichen und auf geringstmögliche Unterschiede zueinander mittels Amplituden- und Phasenregelung ausgeregelt um Einflüsse wie Reflexion, Fremdlicht, Temperatur und Alterung zu kompensieren. Die Regelwerte der Amplituden- bzw. Phasenregelung entsprechen dann dem Wert der Reflexion bzw. Lichtlaufzeit. Dazu wird das Empfangssignal eines Taktzyklus aus Lichtquelle und Kompensationslichtquelle in vorzugsweise etwa vier gleiche Abschnitte, d.h. Einschaltzeitabschnitte eingeteilt. Wird die Einschaltzeit der Lichtquelle mit den Abschnitten A und B bezeichnet und die Einschaltzeit der Kompensationslichtquelle mit C und D, so werden die Abschnitte A und C verglichen und mittels Phasenverschiebung zueinander auf geringstmögliche Unterschiede ausgeregelt. Die Abschnitte B und D werden mittels Amplitudenregelung ebenso zueinander auf geringstmögliche Unterschiede ausgeregelt. In den Abschnitten A und C steckt die Information der Lichtlaufzeit, in den Abschnitten B und D die Information über den Reflexionsgrad. Aus der Verzögerung des Phasenschiebers kann dann die Lichtlaufzeit und damit die Entfernung zwischen Lichtquelle und Objekt bzw. Empfänger bestimmt werden.

Die Kompensation ermöglicht ein vollständiges Auslöschen der taktsynchronen Signalanteile, d.h. nur das eigentliche Verstärkerrauschen bleibt übrig. Der Photodiodenverstärker kann daher eine sehr hohe Verstärkung aufweisen, bzw. kann sogar als hochverstärkender Begrenzerverstärker ausgeführt werden.

Damit werden die bei Taktwechsel auftretenden Taktwechselsignale erfasst und aus diesen ein Differenzwert bestimmt, der mittels eines Phasenschiebers minimiert wird. Aus der Verzögerung des Phasenschiebers kann die Lichtlaufzeit und damit die Entfernung zwischen Sender und Objekt bzw. Empfänger bestimmt werden. Die Kompensation ermöglicht einerseits ein Auslöschen taktsynchroner Anteile, d.h. nur das Verstärkerrauschen bleibt übrig. Durch die hohe Verstärkung des Empfangssignals zeichnet sich der Peak beim Taktwechsel deutlich ab. Dieser Peak tritt im jeweiligen Takt der Sendelichtquelle und der Kompensationslichtquelle mit unterschiedlicher Polarität gegenüber dem Mittelwert des Rauschens auf und gelangt auf zwei entsprechend synchron zum Takt zu den entsprechenden Zeitabschnitten geschaltete Eingänge eines Vergleichers. Dieses Taktwechselsignal ist von der Amplitude her abhängig von der Reflexion, da es jedoch lediglich um die Minimierung des Differenzwertes geht, lässt sich der Differenzwert des Signals von Takt zu Takt taktsynchron in der Amplitude demodulieren und zur Ansteuerung des Phasenschiebers verwenden. Aufgrund des Taktes ist der Zeitpunkt des Auftretens des Taktwechselsignals bekannt, so dass dort nur der Peak zu erfassen ist. Gleichzeitig kann mit einem beliebigen Takt gearbeitet werden.

Der Synchrondemodulator wird somit zur taktabschnittsweisen Amplitudendetektion eingesetzt, an dessen Eingang ein ausgeregeltes Nullsignal aus beiden Strecken der vorzugsweise optischen Waage In diesem Fall werden zwei Lichtstrecken voneinander unabhängig nach außen geführt, die so in ihrer Amplitude ausgeregelt sind, dass die Empfangssignale am Eingang des Zentrierverstärkers bzw. Synchrondemodulators zueinander bereits Null sind und sich damit kein sich änderndes Signal ergibt. Liegt am Ausgang des Synchrondemodulators und Vergleichers noch ein Signal an, wird über eine Zentrierstufe oder einen Vergleicher die Lichtleistung wenigstens eines Senders über einen Regler so beeinflusst, dass sich dieses Signal taktweise zueinander zu Null ausregelt und somit auch das Signal am Eingang des Synchrondemodulators. Aus dem dann verbleibenden Nullsignal, das dann eigentlich nur aus dem Verstärkerrauschen ohne taktsynchrone Wechselanteile besteht, kann am Ausgang des Amplitudendetektors ein eventuell auftretendes Taktwechselsignal im Rauschen detektiert und wieder zu Null ausgeregelt werden. Dieser Wert kann auch zu einem beliebigen Zeitpunkt abgetastet werden, zu dem keine Phaseninformation mehr vorhanden ist. Dieser Differenzwert der nicht phasentreuen Amplitudenwerte wird im Phasenschieber so verändert, bis er minimal_und vorzugsweise zu Null wird, um dadurch die Lichtlaufzeit zu bestimmen.

Damit läst sich eine Kamera mit 3D-Fähigkeit aufbauen. Die ermittelten Signale können so ausgewertet werden, dass gleichzeitig zur Reflexionsmessung oder nahezu gleichzeitig die Entfemungsmessung erfolgt und zudem die anstehenden Lichtsignale auch als Bildinformation vorliegen. Werden damit die Pixel einer Kamera angesteuert, ergeben sich aufgrund der genauen Entfemungsmessung sehr günstige und exakt arbeitende Bilderfassungsmittel.

Durch die beiden geschlossenen Regelkreise einer Amplitudenregelung einerseits und einer Laufzeitregelung andererseits zu jeweils einem "0-taktsynchronen" Anteil werden folgende Vorteile insbesondere auch für den Einsatz an Kameras erreicht:
- sehr hohe Empfindlichkeit
- sehr gute Laufzeitmessung auch im Nahbereich (bis "0"- Abstand)
- keine Fremdlichtempfindlichkeit
- keine Temperatureinflüsse auf Laufzeitdetektion
- Verwendung von Low-Frequency Bauelementen (C-Mos Technologie)
- Verwendung von großflächigen Low-Cost Photodioden mit hoher Eigenkapazität
- Verwendung von LEDs als Sender (geringe Sendeleistung)
- Unkritisch bei Änderungen der Vorverstärkerparameter
- kein Einfluss der Reflexionseigenschaften des reflektierenden Körpers auf die Entfemungsmessung

Vorteilhafterweise wird die Phasenverschiebung zwischen dem ersten Lichtsignal über die Lichtstrecke und dem zweiten Signal von der Kompensationslichtquelle mittels eines Regelkreises geregelt, in den der Differenzwert der Taktwechselsignale als Steuersignal eingeht, der durch die Regelung minimiert wird.

Es ist von Vorteil, wenn das Licht aus der Lichtstrecke und aus dem weiteren Lichtweg möglichst winkelgleich beim Empfänger eintreffen. Hierzu können Umlenkmittel vorgesehen sein.

Weitere Vorteile ergeben sich aus der nachfolgenden Beschreibung und den weiteren Ansprüchen.

### Kurzbeschreibung der Figuren

Im Folgenden wird die Erfindung anhand von in den Figuren dargestellten Ausführungsbeispielen näher erläutert. Es zeigen:
- Fig. 1: ein schematisches Schaltbild einer erfindungsgemäßen Schaltung zur Lichtlaufzeitmessung,
- Fig. 2: das am Empfänger der Fig. 1 anstehende, aus Vereinfachungsgründen gestaucht dargestellte Empfangssignal mit der zugehörigen Aufteilung in verschiedene Bereiche,
- Fig. 3: das Signal gemäß Fig. 2 oben nach Einsatz des Phasenschiebers,
- Fig. 4: den Lichtverlauf am Empfänger aus der Messstrecke ohne und mit Lichtstrecke,
- Fig. 5: das resultierende Lichtsignal zur Photodiode,
- Fig. 6: beispielhaft einen Puls aus Fig. 5,
- Fig. 7: den Puls von Fig. 6 nach Durchlaufen von Photodiode und Verstärker,
- Fig. 8: ein zugehöriges Kamerasystem,

Bevor die Erfindung im Detail beschrieben wird, ist darauf hinzuweisen, dass sie nicht auf jeweiligen Bauteile der Schaltung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Die Erfindung ermöglicht eine Entfernungsmessung, die frei von Fremdlichtproblemen unabhängig vom Grad der Reflexion mit großflächigen Low-Cost Photodioden und Verstärkern geringer Bandbreite eine exakte Lichtlaufzeitmessung erlaubt. Des weiteren ist eine Laufzeitmessung im Nahbereich ab Sensoroberfläche bis hin zu größeren Entfernungen ohne Umschalten des Messbereichs möglich. Der bevorzugte Einsatzzweck sind Kameras, wenngleich die Erfindung im Folgenden nur unter Bezug auf ein Pixel erläutert wird.

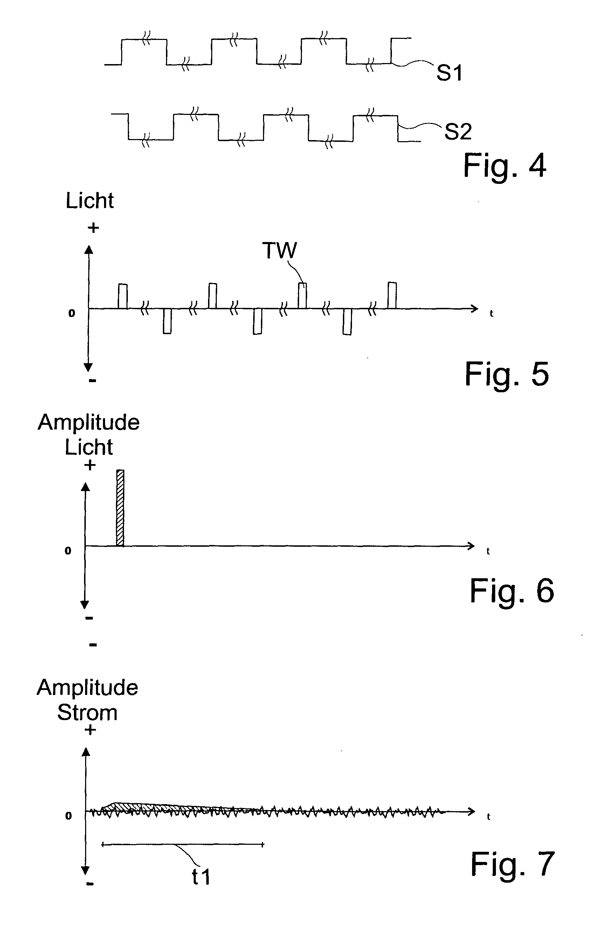

Die Erfindung geht von nachfolgender Überlegung aus: Eine LED (oder Laser) sendet Pulse aus und mit einer Photodiode empfangen wird mit z.B. 100 KHz und einem Puls-Pause-Verhältnis von 50% aus, die in ca. 15 cm Entfernung von einem reflektierenden Gegenstand zurückgeworfen und mit einer Photodiode als Empfänger 13 empfangen werden. In der theoretischen Betrachtung erscheint der empfangene Puls somit um ca. 1 ns zeitversetzt zum Sendeimpuls. Zunächst wird die Zeitdifferenz, also das verspätete Ankommen des Sendeimpulses von der eigentlichen Pulsinformation abgetrennt. Dazu wird in der Pulspause des Sendeimpulses eine zweite LED aktiviert, die ihre Lichtleistung ohne den Umweg der Reflexionsstrecke direkt auf die Photodiode sendet. Kommen an der Photodiode gemäß Fig. 4 beide Lichtleistungen S1, S2 mit gleicher Amplitude an (die natürlich über eine Amplitudenregelung der LEDs gleich groß gehalten werden kann) erscheint an der Photodiode ein im Wesentlichen Gleichlichtsignal bestehend aus Licht der beiden LEDs alternierend und einem möglichen Fremdlichtanteil. Dieses Gleichlicht erzeugt also einen im Wesentlichen nicht tatsynchron modulierten Gleichstrom in der Photodiode.

Bei genauerer Betrachtung ist dem Gleichstrom an dem Übergang der Sendepulse der beiden LEDs eine Laufzeitdifferenz von 1 ns aufgeprägt. In einer Phase entsteht eine Lücke im "Gleichlicht" der abwechselnden LEDs dort, wo die in der Nähe des Empfängers befindliche LED schon abgeschaltet hat, aber das Licht der zweiten LED noch die 15 cm zum reflektierenden Gegenstand und zurück zurücklegen muss. In der zweiten Phase wird die LED in Nähe der Photodiode schon Licht senden, während von der zweiten, im richtigen Zeitpunkt zwar abgeschalteten LED immer noch Licht unterwegs zur Photodiode ist. Schematisch ist dies in Fig. 5 dargestellt. Es ergibt sich ein sehr kurzer Peak im Empfangssignal mit phasensynchroner abwechselnder Polarität. Diese Zeitdifferenz ist für die empfangende Photodiode extrem klein, sodass sie bei einem Tiefpassverhalten von z.B. 200 KHz (großflächige Photodiode z.B. BPW 34) nur als extrem geringer Stromänderungswert auftritt.

Hierauf wird das Energieerhaltungsgesetz angewandt: Nehmen wir an, nur die nach außen zum reflektierenden Gegenstand gerichtete LED würde getaktet senden und die zur Photodiode gerichtete LED wäre aus, so empfängt die Photodiode ein Wechsellicht, das als Spannung dargestellt z.B. eine Wechselspannung von 10mV an einem Ausgang eines beliebigen der Photodiode nachgeschalteten Wechselspannungsverstärkers ergibt. Könnten wir von einer idealen Photodiode und einem idealen Verstärker mit idealem Anstiegszeitverhalten ausgehen, würden wir bei einer sendenden LED weiterhin von einem 10mV Ausgangssignal mit 50% Zyklus ausgehen. Schaltet man die zweite LED hinzu, ergeben sich wegen der Laufzeit eines Signals Pulse von 1 ns taktsynchron abwechselnd in positiver und negativer Richtung (Fig. 5). Diese Pulse sind dann im beschriebenem Fall die einzige Information im verstärkten Signal und repräsentieren die Laufzeitinformation. In der Praxis wird jedoch das "Tiefpassverhalten" von Photodiode und Verstärker diesen extrem kurzen Impuls "verschlucken".

Hier kommt der Vorteil des amplitudenmäßig ausgeregelten Systems gemäß der Erfindung zum Tragen: Da nur die kurzen Pulse als Wechselinformation an der Photodiode anliegen, kann das Photodiodensignal fast beliebig verstärkt werden z.B. mit einer Verstärkung von zehntausend. Der theoretische Lichtimpuls von 1 ns Länge und im Idealfall von 10 mV an einem idealen Verstärkerausgang ruft zwar in der Praxis nur einen stark verschliffenen Spannungshub von z.B. 10 µV hervor (schematisch Fig. 6), der aber nun nach einer zehntausendfachen Verstärkung ein Signal von 100 mV mit einer Länge t1 von z.B. 5 µs ergibt (Fig. 7). Dabei werden an den Verstärker keine besonderen Ansprüche gestellt, 200 KHz Bandbreite reicht für eine entsprechende Verstärkung aus. Das Signal erscheint nach dem Umschalten von einer LED zur zweiten nach dem Umschaltzeitpunkt in alternierenden Richtungen (positivnegativ). Durch einen synchron zum Takt geschalteten Gleichrichter kann das Empfangssignal zu diesem Zeitpunkt auf synchrone Signalanteile untersucht werden. Durch einfache Integration der synchron demodulierten Signalanteile können auch in einem stark verrauschten Signal, wie es z.B. durch Photonenrauschen bei direkter Sonneneinstrahlung in die Photodiode auftritt, noch einwandfrei durch Laufzeitunterschiede entstandene Signalanteile detektiert werden. Zu erwähnen ist, dass es sich bei dem Synchrongleichrichter oder Synchrondemodulator D1. D2 nicht um eine Schaltung handelt, die die Phase genau zu detektieren hat, sondern die taktweise die Amplitude detektiert. Die Phasengenauigkeit hat keinen Einfluss auf die Messgenauigkeit, so dass z.B. eine Phasenverschiebung von 20° noch unbeachtlich ist

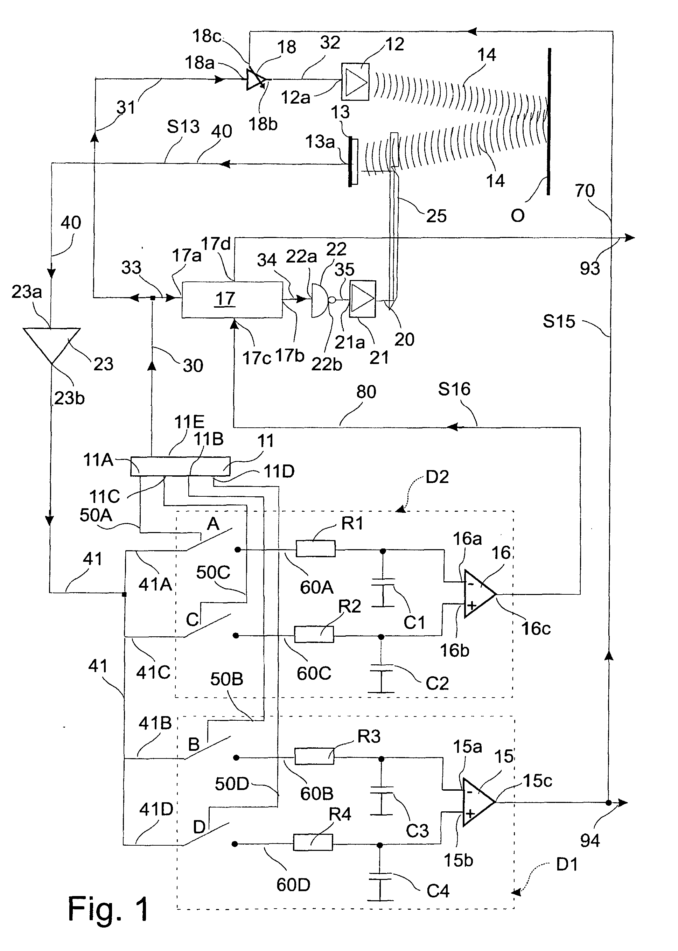

Da das Auftreten dieser taktsynchronen Signalanteile auf einen Laufzeitunterschied zwischen den beiden LEDs hinweist und dazu auch eine klare Zuordnung zu den LEDs zulässt, kann mit dieser Information ein Regelkreis gemäß Fig. 1 (s.u.) derart geschlossen werden, dass das Signal der direkt in die Photodiode einstrahlenden LED mit bekannten Mitteln (regelbare Laufzeit z.B. mittels einstellbarem Allpass oder digital einstellbarer Phasenverschiebung) um den gleichen Betrag verschoben wird wie das an einem Gegenstand reflektierte Licht. Die nötige Verschiebung des elektrischen Ansteuerimpulses am Phasenschieber 17 (Fig. 1) für die direkt einstrahlende LED 12 ist dann ein direktes Maß für die Lichtlaufzeit und somit auch ein direktes Maß für die Entfernung des reflektierenden Gegenstandes.

Nach der Synchrondemodulation der Laufzeit-abhängigen Signalanteile können die beiden Signalanteile zur gegenseitigen Ausregelung auf "0" mittels Phasenverschiebung der direkt einstrahlenden LED selbstverständlich z.B. in weiteren hochverstärkenden Operationsverstärkern - ohne besondere Anforderung an die Bandbreite - miteinander verglichen werden. Liegt dann ein noch so kleiner Unterschied der beiden taktsynchronen Signalanteile vor, wird dieser über die Phasenregelung zu "0" ausgeregelt. Wenngleich beliebige Verstärker einsetzbar sind, werden vorzugsweise Wechselspannungsverstärker eingesetzt.

Im Ausführungsbeispiel werden zwei unterschiedliche Regelkreise in Fig. 1 unten gleichzeitig verwendet. Zum einen wird die Empfangsamplitude für beide LED-Strecken durch Amplitudenregelung mindestens einer der beiden LEDs am Eingang der Photodiode (Empfänger 13) auf gleichen Wert geregelt, wie dies aus der EP 706 648 B1 bekannt. Da nach dem Umschalten von einer LED auf die zweite LED der Phasenunterschied als Amplitudeninformation stark in die Länge gezogen ist, sollte erst zu einem Zeitpunkt das Signal auf taktsynchrone Amplitudenunterschiede untersucht werden, wenn die Laufzeitinformation schon abgeklungen ist. In der Praxis hat sich z.B. eine Taktfrequenz von ca. 100KHz - 200 KHz als tauglich erwiesen, wobei in einem ersten Teil einer Taktperiode das Signal auf Laufzeitunterschiede, die ja dann als Amplitude im Signal auftreten, vor der Ausregelung der Phase untersucht wird und im zweiten Teil einer Taktperiode auf reine Amplitudenunterschiede. Mit der Information aus der zweiten Hälfte einer Taktperiode wird dann wenigstens eine der im Ausführungsbeispiel zwei LEDs nur in der Amplitude beeinflusst, um etwa gleich große Signale aus beiden Lichtstrecken zu erhalten und damit den Differenzwert zu Null zu regeln. Gleich große Signale beider Lichtstrecken führen zu einem Nullsignal ohne taktsynchrone Wechselanteile.

Selbstverständlich muss nicht unbedingt die Phase der direkt in die Photodiode einstrahlenden LED entsprechend der Lichtlaufzeit der anderen, die Reflexion verursachenden LED angepasst werden, bei entsprechender Beschaltung kann auch die die Reflexion verursachende LED beeinflusst werden.

Durch diese beiden geschlossenen Regelkreise
- Amplitudenregelung
- Laufzeitregelung
zu jeweils einem "0-taktsynchronen" Anteil werden die Eingangs genannten Vorteile erreicht.

Bei Verwendung einer Kamera mit einzeln adressierbarem Pixel lässt sich selbstverständlich für jedes Pixel die Entfernung zum reflektierenden Gegenstand ermitteln. In der Anwendung in einer Kamera bietet das beschriebene System noch den Vorteil, dass die Informationen für Entfernung, Reflexion und Bildinhalt getrennt anstehen. Da die Entfernungsmessung an dem jeweiligen Pixel ein "0-Signal" ausregelt, stört die eigentliche Messung nicht die Bildinformation, die ja auf eine externe Lichtquelle (natürliches Tageslicht, Sonne) zurückgreift.

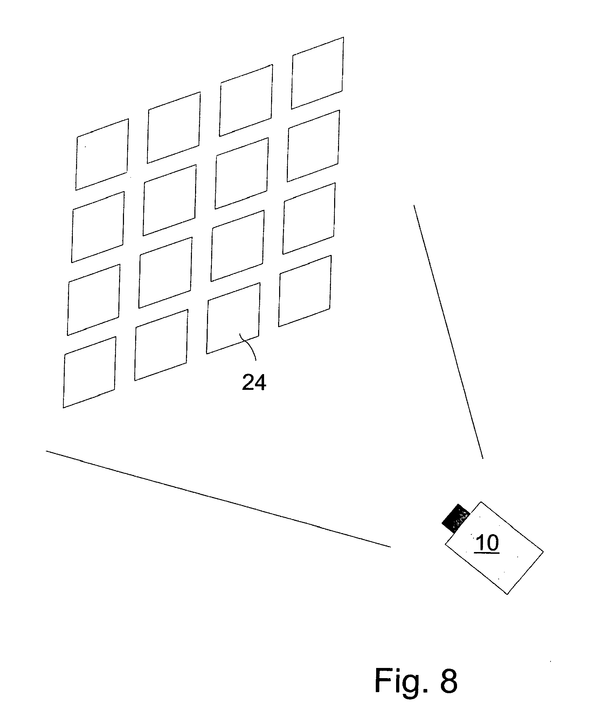

Unter Bezug auf Fig. 1 wird bei der erfindungsgemäßen Anordnung Licht dem Empfänger 13 über eine zweite Lichtstrecke 20 zugeleitet und ist zudem eine Amplitudenkompensation vorgesehen. Das Verfahren dient zur Lichtlaufzeitmessung, insbesondere für Kameras 10 (Fig. 8). Zunächst wird eine Lichtstrahlung von einer Taktsteuerung 11 z.B. mit 200 KHz moduliert vom Ausgang 11 E über Leitung 30, 31, 32 über den Sender 12 d.h. eine Lichtquelle in eine Lichtstrecke 14 eingestrahlt. Leitung 30 führt zum Eingang eines Leistungsreglers 18 und von dessen Ausgang 18b über Leitung 32 zum Eingang 12a des Senders 12. Das Licht gelangt vom Sender 12 zum Objekt O und wird dort rückgestrahlt zum Empfänger 13. Mit dem selben Takt, jedoch durch den Invertierer 22 invertiert, wird Licht auch von einem weiteren Sender 21 als Kompensationslichtquelle oder einer zeichnerisch nicht dargestellten Kompensationslichtquelle in den Empfänger 13 eingestrahlt. Dazu gelangt das Signal der Taktsteuerung 11 über Leitung 30, 33 an Eingang 17a des Phasenschiebers und über Ausgang 17b des Phasenschiebers und Leitung 34 an den Eingang 22a des Invertierers 22, von dessen Ausgang 22b das Signal über Leitung 35 an den Eingang 21 a des weiteren Senders 21 kommt. Damit liegt am Ausgang 13a des Empfängers im Wechsel des Takts der Taktsteuerung 11 das Signal S13 aus den beiden Lichtstrecken auf Leitung 40 an. Das weitere Signal, das von dem weiteren Sender 21 stammt, ist im Ausführungsbeispiel der Fig. 1 ein ebenfalls von der Taktsteuerung 11 getaktetes Lichtsignal, das vorzugsweise parallel zum ersten Lichtsignal aus Lichtstrecke 14 dem Empfänger 13 zugeleitet wird. Bei diesem Signal hat jedoch das Licht eine hinsichtlich ihrer Entfernung bekannte Strecke zurückgelegt. Das Signal S13 gelangt über Leitung 40 zu Verstärker 23 und wird im Verstärker verstärkt und dann über Leitung 41 zwei ähnlich aufgebauten Synchrondemodulatoren D1, D2 mit Vergleicher zugeleitet, die in Fig. 1 unten dargestellt sind. Aufgabe der Synchrondemodulatoren D1, D2 ist es dabei nicht, die Phase genau zu detektieren, sondern taktweise die Amplitude. Die Phasengenauigkeit hat keinen Einfluss auf die Messgenauigkeit, so dass z.B. eine Phasenverschiebung von 20° noch unbeachtlich ist.

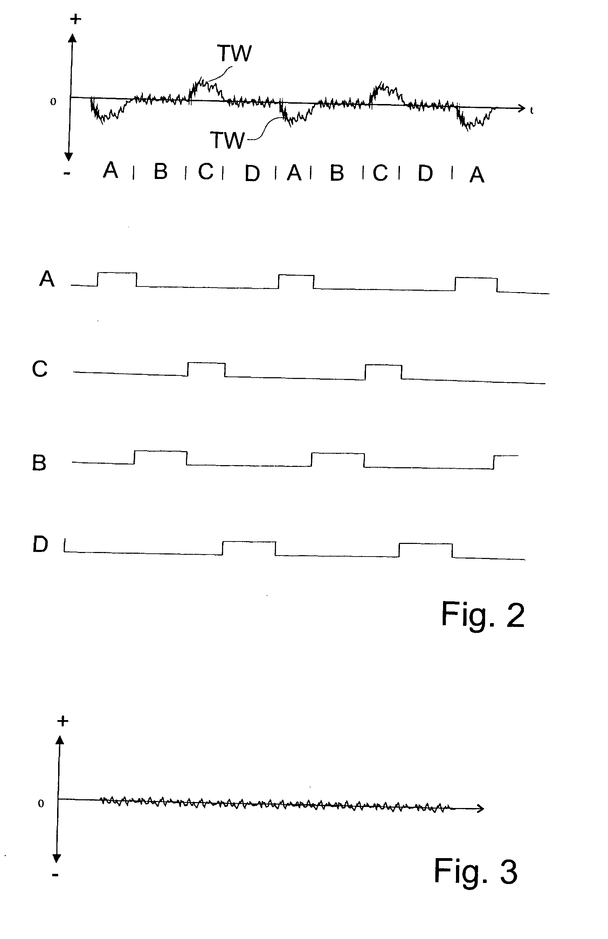

Bevor auf diese Schaltungen näher eingegangen wird, zeigt Figur 2 oben das Signal, wie es nach dem Verstärker 23 ansteht. Das dargestellte Signal zeigt einen Signalverlauf, wie er bei einer Lichtlaufzeit über z. B. 15 cm Reflexionsabstand ohne eine Anpassung der Signalphase mindestens einer der beiden LEDs von Sender 12 und weiterem Sender 21 vorliegt. Das Auftreten der taktsynchronen Signalanteile kann mit einer entsprechenden Torschaltung erfasst und den entsprechenden LEDs zugeordnet werden. Dabei ist zwischen Amplitudenunterschieden im gesamten Taktbereich und Signalamplituden unmittelbar nach dem Umschalten des Takes zu unterscheiden. Dazu wird ein Taktzyklus in 4 Abschnitte A/B/C/D in Fig. 2 unterteilt. Die Abschnitte B, D repräsentieren Amplitudenwerte, die im ausgeregelten Zustand ohne taktsynchrone Amplitudenunterschiede, also d. h. von Takt zu Takt, gleich sind. Der ausgeregelte Zustand der Abschnitte B, D bezieht sich auf die Amplitudenregelung mindestens einer der beiden LEDs. Im ausgeregelten Zustand der Amplituden in den Taktabschnitten B und D auf gleiche Werte steht bei gleicher Lichtlaufzeit von beiden LEDs an der Photodiode ein Signal ohne taktsynchrone Signalanteile an. Nur bei einem Laufzeitunterschied zwischen weiterer Lichtstrecke 20 und Lichtstrecke 14 erscheint ein taktsynchroner Signalanteil.

In Fig. 1 werden die Synchrondemodulatoren D1 und D2 mit Vergleicher von der Taktsteuerung 11 über die Ausgänge 11A, 11B, 11C und 11D und die zugehörigen Taktleitungen 50A, 50B, 50C und 50D so ausgesteuert, dass Synchrondemodulator D1 den taktsynchronen Amplitudenunterschied im empfangenen Signal S13 über den Leistungsregler 18 zur Regelung der Amplitude zu "0" ausregelt, während Synchrondemodulator D2 den Laufzeitunterschied zwischen den Lichtstrecken detektiert und über den Phasenschieber 17 zu "0" ausregelt. Bei nicht ausgeregelter Lichtlaufzeit steht in den Taktabschnitten A und C ein taktsynchroner Signalanteil mit von Phase zu Phase wechselnder Polarität an, der am Ausgang des Synchrondemodulators D2 zu einem Regelsignal S16 führt, das wiederum den Phasenschieber 17 so ansteuert, dass am Ausgang 23b des Verstärkers 23 ein "0" -Signal ohne taktsynchrone Signalanteile anliegt.

Im Synchrondemodulator D1 wird das Empfangssignal S13 wieder in die beiden Lichtstrecken 14 sowie 20 zerlegt. Dazu gelangt das Signal über Leitung 41, 41B, 41 D zu den Abschnitten B und D zugeordneten Schaltern, die über Taktleitung 50B und 50D von der Taktsteuerung 11 im Taktwechsel der Abschnitte B und D betätigt sind. Damit steht entsprechend der Schalterstellung am Ausgang der Schalter das den Abschnitten B und D entsprechende Signal auf Leitung 60B und 60D an. Diese Signale werden über einen Integrator R3, R4 und/oder C3, C4 den Eingängen 15a, 15b des Vergleichers 15 zugeleitet, an dessen Ausgang 15c bei gleichgroßen Signalen ein entsprechendes Steuersignal für einen Nullzustand des Signals S13 ansteht. Steht dort ein anderes Signal an, ergibt sich ein beliebiges Steuersignal als Signal S15 für die Amplitudenregelung durch den Leistungsregler 18 über Leitung 70 an den Eingang 18c des Leistungsreglers 18, der die Strahlungsleistung des Senders 12 in der Amplitude so nachregelt, dass das Signal S13 zu einem dem Nullzustand entsprechenden Signal wird, d.h. keine taktsynchrone Anteile enthält und somit keine weitere Nachregelung erforderlich ist. In diesem Zustand sind die taktsynchronen Wechselanteile eliminiert, d.h. Einflüsse, die z.B. von Reflexionseigenschaften, Fremdlicht oder Temperaturänderungen herrühren, haben keinen Einfluss auf die Lichtlaufzeitmessung. In der Zeichnung wird die Strahlungsleistung des Senders 12 nachgeregelt, es versteht sich jedoch von selbst, dass diese Regelung, wie auch aus der EP 706 648 B1 bekannt ebenso auf den weiteren Sender 21 oder auf beide oder im Fall mehrerer Sender auf mehrere Sender einwirken kann. Dasselbe gilt für den Fall einer Kompensationslichtquelle, die unmittelbar dem Empfänger 13 zugeordnet ist. Das Signal S15 ist damit gleichzeitig das Signal 94 für die Reflexion oder die Amplitude.

Mit anderen Worten wird der Synchrondemodulator D1 zur taktabschnittsweisen Amplitudendetektion eingesetzt, an dessen Eingang, d.h. an den den Abschnitten B und D zugeordneten Schaltern vorzugsweise bereits ein ausgeregeltes Nullsignal aus beiden Strecken einer optischen Waage ansteht. Dazu werden in Fig. 1 zwei Lichtstrecken voneinander unabhängig nach außen geführt, die so in ihrer Amplitude ausgeregelt sind, dass sie am Eingang des Synchrondemodulators D1 zueinander bereits Null sind und sich kein sich änderndes Signal ergibt. Dies erfolgt durch die in Figur 1 unten dargestellten Schalter B und D zur Kompensation von Fremdeinflüssen, die für die gewünschte Genauigkeit erforderlich ist. Aus dem dann verbleibenden Nullsignal kann am Ausgang des Amplitudendetektors in Form des Synchrondemodulators D2 das Taktwechselsignal im Rauschen detektiert werden.

Eine Phasenänderung der Abtastzeiten über die Taktleitungen 50A, 50B, 50C, 50D hat in weiten Bereichen keinen Einfluss auf die Abstandsmessungen. Im Gegensatz zu der in der DE 100 22 054 A1 benötigten hohen Genauigkeit der Phase des Synchrondemodulators geht sie erfindungsgemäß nicht in die Entfemungsmessung ein. Lediglich ein Abtasten der Amplitude zu einem ungefähren Zeitpunkt des Taktes ist notwendig. Daher ist erfindungsgemäß die Synchrondemodulation nur quasi eine Synchrondemodulation. Die Phase ist an sich kaum von Bedeutung, um Unterschiede in der Amplitude der Taktwechselsignale erkennbar zu machen und die Amplitude am Eingang des Amplitudendetektors in Form des Synchrondemodulators D2 zu Null zu machen. Diese Taktwechselsignale werden dann mittels der Phasenverschiebung der Komponenten zueinander minimiert und vorzugsweise zu Null gemacht. Die damit sich ergebende Verzögerung des Phasenschiebers 17 ist die Lichtlaufzeit.

In Figur 1 Mitte werden die beiden oberen Schalter des Synchrondemodulators D2 durch die Torschaltung entsprechend den Bereichen A und C gemäß Fig. 2 oben angesteuert. Im Synchrondemodulator D2 wird das Empfangssignal S13 ebenfalls den Amplitudensignalen der beiden Lichtstrecken 14 sowie 20 zugeordnet, allerdings die den Abschnitten A und C entsprechenden Signalabschnitte. Dazu gelangt das Signal über Leitung 41, 41A, 41C zu den Abschnitten A und C zugeordneten Schaltem, die über Taktleitung 50A und 50C von der Taktsteuerung 11 im Taktwechsel der Abschnitte A und C betätigt sind. Damit steht entsprechend der Schalterstellung am Ausgang der Schalter das den Abschnitten A und C entsprechende Signal auf Leitung 60A und 60C an. Diese Signale werden über Integratoren R1, R2 und/oder C1, C2 den Eingängen 16a, 16b des Vergleichers 16 zugeleitet.

Damit wird taktweise das beim Taktwechsel auftretende, der Lichtlaufzeit in der Lichtstrecke entsprechende erste Lichtsignal und das zweite Signal, d.h. ein weiteres Lichtsignal erfasst. Die Größen der Signale sind in ihrer Amplitude zwar von der Reflexion abhängig, da es jedoch um die Bestimmung des taktsynchronen Differenzwertes zwischen diesen beiden Signalen geht, spielt dies keine Rolle. Die beiden Signale werden in dem weiteren Vergleicher 16 verglichen. Der Differenzwert entspricht dem Phasenunterschied zwischen erstem Lichtsignal und zweitem Signal und ist auf Grund der Integration in der Photodiode zu einem Amplitudenwert umgewandelt. Dieser Wert kann zu einem beliebigen Zeitpunkt abgetastet werden, zu dem keine Phaseninformation mehr vorhanden ist. Dieser Differenzwert der nicht phasengenauen, d.h. nicht genau in den Phasengrenzen übereinstimmenden Amplitudenwerte gelangt über Leitung 80 als Signal S16 an den Eingang 17c des Phasenschiebers 17 und wird im Phasenschieber 17 so verändert, bis er minimal und vorzugsweise zu Null wird, um dadurch die Lichtlaufzeit zu bestimmen. Aus der dabei eingestellten Verzögerung des Phasenschiebers 17 kann die Lichtlaufzeit bestimmt werden und damit die Entfernung, die am Ausgang 17d des Phasenschiebers 17 als Signal Laufzeit 93 ansteht. Durch die Veränderung des Phasenschiebers verschwinden die Amplituden des Taktwechselsignals TW gemäß Figur 3 im Rauschen.

Der Phasenschieber 17 kann eine analog arbeitende Schaltung sein, aber auch eine digitale Signalverzögerung. Dabei kann z.B. ein hochfrequenter Takt so ausgezählt werden, dass z.B. der Takt in 1 ns-Schritte versetzt werden kann. Dazu wird das Signal S16 mit einem A/D Wandler abgetastet und das Ergebnis in eine entsprechende Phasenschiebung umgewandelt.

Der Empfänger 13 kann eine teilweise lichtdicht beschichtete Photodiode sein . Dazu kann z.B. der Rand 13b der Photodiode lichtdicht beschichtet sein. In die Photodiode einfallendes Licht, vor allem wenn es nicht unmittelbar frontal auf die Photodiode trifft, führt zu unterschiedlichen Anstiegszeiten des elektrischen Signals gegenüber denen frontal einfallenden Lichtes. Dadurch kann das Messergebnis verfälscht werden.

Die bisherige Erläuterung bezieht sich auf die Darstellung eines Pixels. Es können natürlich auch in einem Array mehrere bzw. viele Pixel angeordnet sein, die mit einer Optik z.B. einen Betrachtungsbereich abbilden. In diesem Fall wird z.B. sequentiell für jedes Pixel einzeln der Abstand bestimmt.

In der Praxis stellt sich heraus, dass unterschiedliche Einstrahlwinkel des reflektierten Signals und der direkt einstrahlenden LED zu einer Verfälschung des Messergebnisses führen. Aus der DE 103 22 552 A1 sind Mittel bekannt, um zwei unterschiedliche Lichtwege mit nahezu gleichem Winkel auf die Photodiode auftreffen zu lassen. Das vom weiteren Sender 21 stammende Lichtsignal wird daher über translucente oder transparente Umlenkmittel 25 umgelenkt, bis es etwa parallel oder winkelgleich zu dem aus der Lichtstrecke 14 stammenden Licht am Empfänger eintritt. Vorzugsweise wird das zweite Signal zumindest teilweise in den Empfänger 13 umgelenkt, während das aus der Lichtstrecke 14 stammende erste Lichtsignal im Wesentlichen unverändert am Empfänger eintrifft.

Die Taktsteuerung 11 arbeitet vorzugsweise mit einem Takt zwischen 50 bis 200 KHz. Diese Taktzahlen sind deutlich geringer als die bisher im Stand der Technik bei der Lichtlaufzeitmessung bisher eingesetzten Takte. Damit können größere und günstigere Photodioden verwendet werden. Zudem kann mit niederfrequenten Verstärkern gearbeitet werden.

Da zur Lichtlaufzeit- bzw. Entfemungsmessung und zur Reflexionsmessung das ausgesendete taktsynchrone Lichtsignal in der Photodiode zu einem taktsynchronem Null-Anteil geregelt ist, stören diese Messungen nicht die nicht-taktsynchronen Bildinformationen der Pixel einer Kamera. Der taktsynchrone Null-Anteil erscheint lediglich als ein geringer zusätzlicher Gleichlichtpegel. Bei Amplitudenregelung des Kompensationsregelkreises ändert sich dieser Gleichlichtpegel mit der Stärke der Reflexion an reflektierenden Objekten. Da der Wert der Reflexion jedoch im Signal S15 enthalten ist, lässt sich mit ihm der eigentliche vom Pixel gemessene Helligkeitswert entsprechend korrigieren. In der Praxis hat sich in den meisten Fällen eine Korrektur als nicht notwendig erwiesen, im Gegenteil führte das ausgesendete Licht zu einer gewünschten Objektbeleuchtung bei fehlendem Umgebungslicht.

Bei Anwendung mit nur einem Pixel kann als Sendeelement eine herkömmliche LED, als Photodiode kann eine großflächige Low-Cost Photodiode, z.B. BPW 34 von Osram verwendet werden. Der Photodiodenverstärker kann in C-Mos-Technologie aufgebaut sein und z.B. eine Bandbreite von nur 200KHz haben. Die Parameter des Verstärkers gehen kaum in die Messgenauigkeit ein, so dass hier nur geringe Ansprüche gestellt werden. Sieht man von einer in der Erfindung nicht näher beschriebenen digital realisierbaren Phasenverschiebung (Hohe Clock-Frequenzen) des Referenzsignals nach dem Stand der Technik ab, kann das System mit einem Systemtakt von nur 50 bis 200KHZ betrieben werden. Bei Vermeidung hoher Taktfrequenzen ausschließlich zur Generierung einer digitalen Phasenverschiebung kann selbstverständlich auf jede Art von Phasenverschiebung, z.B. in analog integrierter Form, zurückgegriffen werden.

Vorteilhaft bei der Erfindung ist auch die beliebige Wahl der Taktfrequenz, die von einem Taktzyklus zum nächsten beliebige Werte annehmen kann. Zur Unterdrückung von möglichen Interferenzen bei parallel eingesetzten und nicht synchronisierbaren Systemen kann also problemlos ein beliebiges "Frequenzhopping" (FDMA) eingesetzt werden. Somit ist dieses System geeignet, mit einfachen Mitteln nicht nur eine einzelne Lichtlaufzeitmessstrecke zu realisieren, sondern auch aus einer herkömmlichen Kamera, vorzugsweise einer C-Mos Kamera ein 3-D fähiges System zu machen. Dabei steht bei der beschriebenen Erfindung trotz der Entfernungsmessung der im Beleuchtungsbereich der Sendequelle befindlichen Objekte auch die herkömmliche Bildinformation zeitgleich zur Verfügung.

Nach der vorliegenden Erfindung wird eine Lichtlaufzeitmessung möglich, die mit einfachsten Mitteln, geringster Sendeleistung und vollständiger Fremdlicht- und Temperaturunempfindlichkeit eine exakte Lichtlaufzeiterfassung auch im sehr stark verrauschten Empfangssignal vom extremen Nahbereich bis in größte Entfernungen ohne Anpassungen der Elektronik ermöglicht. Auch die Reflexionseigenschaften des zu messenden Objektes haben keinen Einfluss auf das Messergebnis. Dabei werden grundsätzlich Sender oder Kompensator (d.h. z.B. weiterer Sender oder auch beide in ihrer Phase Leistung geregelt.

Die Elemente der zugehörigen Vorrichtung ergeben sich bereits aus der bisherigen Erläuterung, insbesondere unter Bezug auf die Figuren 1 und 9. Wenigstens ein Sender 12 sendet ein von der Taktsteuerung 11 getaktetes erstes Lichtsignals in wenigstens eine Lichtstrecke 14 über ein rückstrahlendes Objekt O an wenigstens einen Empfänger 13 zur Erfassung der Veränderung des ersten Lichtsignals in Folge der Annäherung, Anwesenheit und/oder Entfernung des Objekts O. Der Empfänger 13 empfängt das aus der Lichtstrecke 14 kommende erste Lichtsignal. Am Empfänger 13 sind Mittel zum Ermitteln des Empfangssignals in Folge des ersten Lichtsignals vorgesehen. Ferner sind Mittel zum Übermitteln eines von der Taktsteuerung 11 getakteten zweiten Signals vorgesehen, das sich über eine hinsichtlich ihrer Entfernung bekannte Strecke ergibt. Diese Übermittlung erfolgt mittels des weiteren Senders 21 über die weitere Lichtstrecke 20. Ein Vergleicher 15 vergleicht taktweise das Empfangssignal aus der Lichtstrecke 14 und das zweite Signal zur Erzeugung eines Vergleichswerts am Ausgang des Vergleichers 15. Wenigstens ein Regler 18 verwendet zur Regelung der Amplitudenwerte des Sendesignals und/oder des zweiten Signals den Vergleichswert so, dass das Empfangssignal und das zweite Signal zumindest am Eingang des Vergleichers im Wesentlichen gleich groß sind. Mittel zum taktweisen Erfassen des beim Taktwechsel auftretenden, der Lichtlaufzeit entsprechenden Taktwechselsignals TW zwischen Empfangssignal aus der Lichtstrecke 14 und zweitem Signal bei auf im Wesentlichen gleiche Größe am Eingang des Vergleichers 15 ausgeregelter Größe von Empfangssignal aus der Lichtstrecke 14 und zweitem Signal sind in Form einer Torschaltung vorgesehen. Ein weiterer Vergleicher 16 bestimmt eines Differenzwert S16 durch Vergleich der Taktwechselsignale TW zwischen Empfangssignal aus der Lichtstrecke 14 und zweitem Signal ihrer Amplitude nach. Ein Phasenschieber 17 verändert den Differenzwert S16 zur Veränderung der Phasenverzögerung der Phase von Empfangssignal und zweitem Signal, bis der Differenzwert S16 minimal, vorzugsweise Null wird. Die bei minimalem Differenzwert eingetretene Verzögerung des Phasenschiebers entspricht der Lichtlaufzeit.

Der Vergleicher 15 ist Teil eines zur Amplitudendetektion bestimmten Synchrondemodulators D1 ist. Das Mittel zum taktweisen Erfassen des Taktwechselsignals TW ist eine Torschaltung, die die im Vorzeichen wechselnden Taktwechselsignale TW erfasst und dass der Differenzwert S16 zwischen den Taktwechselsignalen TW als Steuergröße eines Regelkreises verwendet wird. Diese Torschaltung und die weitere Torschaltung der Synchrondemodulatoren D1, D2 mit zugehörigen Vergleichern dienen als Mittel zum Aufteilen der Empfangssignale S13 aus der Lichtstrecke 14 und der Strecke, über die das zweite Signal geleitet wird, in die verschiedenen Bereiche A,B,C,D.

Umlenkmittel 25 sind vorgesehen, die das erste Lichtsignal und das zweite Signal, das in Fig. 1 als Lichtsignal ebenfalls aus einer zweiten Lichtstrecke kommt, dem Empfänger 13 zuleiten und die das umgelenkte Lichtsignal so umlenken, dass die Lichtsignale im Wesentlichen parallel oder winkelgleich in den Empfänger 13 treffen.

Als der wenigstens eine Sender 12, der weitere Sender 21 und/oder die Kompensationslichtquelle werden zumindest teilweise, vorzugsweise durchgängig LEDs eingesetzt.

### Bezugszeichenliste

- 10: Kamera
- 11: Taktsteuerung
- 11A,11E, 11B,11C,11D: Ausgang
- 12: Sender
- 12a: Eingang
- 13: Empfänger
- 13a: Ausgang
- 14: Lichtstrecke
- 15: Vergleicher
- 15a,15b: Eingang
- 15c: Ausgang
- S15: Signal nach Verglei- cher15
- 16: weiterer Vergleicher
- 16a, 16b: Eingang
- 16c: Ausgang
- S16: Differenzwert nach Vergleicher 16
- 17: Phasenschieber
- 17a, 17c: Eingang
- 17b, 17d: Ausgang
- 18: Leistungsregler
- 18a, 18c: Eingang
- 18b: Ausgang
- 20: weitere Lichtstrecke
- 21: weiterer Sender
- 21 a: Eingang
- 22: Invertierer
- 22a: Eingang
- 22b: Ausgang
- 23: Verstärker
- 23a: Eingang
- 23b: Ausgang
- 24: Pixel
- 25: Umlenkmittel
- D1, D2: Synchrondemodulator
- O: Objekt
- R1 - R5: Integrator
- TW: Taktwechselsignal
- 30 - 35: Leitung
- 40,41: Leitung
- 41A,41B,41C,41D: Leitung
- 50A,50B,50C,50D: Taktleitung
- 60A,60B,60C,60D: Taktleitung
- 70 -75,79,80: Leitung
- 90: DC-Entkopplung
- 91: Schalter
- 93: Signal Laufzeit
- 94: Signal Reflexion

## Patentansprüche

1. Verfahren zur Lichtlaufzeitmessung, insbesondere für Kameras (10), mit den Schritten:
- Senden einer Mehrzahl von von einer Taktsteuerung (11) getakteten ersten Lichtsignalen von wenigstens einer Lichtquelle (12) in wenigstens eine Lichtstrecke (14) über ein rückstrahlendes Objekt (O) an wenigstens einen Empfänger (13) zur Erfassung einer Lichtlaufzeit oder Veränderung der Lichtlaufzeit der ersten Lichtsignale in Folge der Annäherung, Anwesenheit und/oder Entfernung des Objekts (O), wobei jedes dieser ersten Lichtsignale aus zeitlich aufeinanderfolgenden Einschaltzeitabschnitten A und B besteht,
- Übermitteln einer Mehrzahl von von der Taktsteuerung (11) mit dem selben Takt getakteten zweiten Lichtsignalen von einer Kompensationslichtquelle (21), die in Pulspausen der ersten Lichtsignale liegen über eine hinsichtlich ihrer Entfernung bekannte Strecke, wobei jedes dieser zweiten Lichtsignale jeweils aus zeitlich aufeinanderfolgenden Einschaltzeitabschnitten C und D besteht und die zweiten Lichtsignale mittels eines Phasenschiebers zeitlich zu den ersten Lichtsignale verschiebbar sind,
- Empfangen der ersten und der zweiten Lichtsignale mittels wenigstens einem Empfänger (13),
- Ermitteln des aus den ersten und zweiten Lichtsignalen resultierenden Empfangssignals am Empfänger (13),
- Aufteilen des Empfangssignals (S13) in die den Einschaltzeitabschnitten A, B, C und D entsprechenden Bereiche, mittels einer Torschaltung im Takt der Taktsteuerung (11),
- taktweises Vergleichen von jeweils einem einem Einschaltzeitabschnitt B der ersten Lichtsignale mit jeweils einem einem Einschaltzeitabschnitt D der zweiten Lichtsignale entsprechenden Empfangssignal zur Erzeugung eines Vergleichswerts am Ausgang eines Vergleichers (15), der zur Regelung der Amplitudenwerte der ersten Lichtsignale und/ oder der zweiten Lichtsignale so verwendet wird, dass die den Einschaltzeitabschnitten B und D entsprechenden Abschnitte des Empfangssignals zumindest am Eingang des Vergleichers in ihrer Amplitude im Wesentlichen gleich groß sind,
- taktweises Erfassen eines ersten, während eines Einschaltzeitabschnitts A am Empfänger (13) empfangenen Taktwechselsignals (TW), und eines zweiten, während eines Einschaltzeitabschnitts C am Empfänger empfangenen Taktwechselsignals (TW), bei im Wesentlichen auf gleiche Amplitude am Eingang des Vergleichers (15) ausgeregelter Größe der den Einschaltzeitabschnitten B und D entsprechenden Abschnitte des Empfangssignals,
- Bestimmen eines Differenzwerts (S16) durch Vergleich des ersten Taktwechselsignals (TW) mit dem zweiten Taktwechselsignal ihrer Amplitude nach in einem weiteren Vergleicher(16),
- Verändern des Differenzwerts (S16) mittels eines Phasenschiebers (17) zur Veränderung der Phasenverzögerung zwischen ersten und zweiten Lichtsignalen, bis der Differenzwert (S16) minimal, vorzugsweise Null wird,
- Verwenden der bei minimalem Differenzwert eingetretenen Verzögerung des Phasenschiebers zur Bestimmung der Lichtlaufzeit.

2. Verfahren nach Anspruch 1, **dadurch gekennzeichnet, dass** der Vergleichswert am Ausgang des Vergleichers zur Regelung der Amplitudenwerte gleichzeitig so verwendet wird, dass Einflüsse wie Reflexionsgrad, Fremdlicht und Temperatur durch Ausregeln des Signals (S15) am Ausgang des Vergleichers (15) auf einen Nullzustand durch Beeinflussung der Lichtleistung der wenigstens einen Lichtquelle (12) kompensiert werden.

3. Verfahren nach Anspruch 1 oder 2, **dadurch gekennzeichnet, dass** als Empfänger (13) eine teilweise, vorzugsweise an ihrem Rand (13b) lichtdicht beschichtete Photodiode verwendet wird.

4. Verfahren nach einem der vorhergehenden Ansprüche, **dadurch gekennzeichnet, dass** die ersten Lichtsignale und die zweiten Lichtsignale, die ebenfalls aus einer zweiten Lichtstrecke kommen, dem Empfänger (13) über Umlenkmittel (25) zugeleitet werden, die die umgelenkten Lichtsignale so umlenken, dass die Lichtsignale im Wesentlichen parallel oder winkelgleich in den Empfänger(13) treffen.

5. Verfahren nach einem der vorhergehenden Ansprüche, **dadurch gekennzeichnet, dass** die Bestimmung der Lichtlaufzeit zur Entfernungsmessung verwendet wird.

6. Vorrichtung zur Lichtlaufzeitmessung, insbesondere für Kameras (10), mit:
- einer Taktsteuerung (11)
- wenigstens einer Lichtquelle (12) zum Senden einer Mehrzahl von von einer Taktsteuerung (11) getakteten ersten Lichtsignalen in wenigstens eine Lichtstrecke (14) über ein rückstrahlendes Objekt (O) an wenigstens einen Empfänger (13) zur Erfassung einer Lichtlaufzeit oder Veränderung der Lichtlaufzeit der ersten Lichtsignale in Folge der Annäherung, Anwesenheit und/oder Entfernung des Objekts (O), wobei jedes dieser ersten Lichtsignale aus zeitlich aufeinanderfolgenden Einschaltzeitabschnitten A und B besteht,
- Mitteln zum Übermitteln einer Mehrzahl von von der Taktsteuerung (11) mit dem selben Takt getakteten zweiten Lichtsignalen von einer Kompensationslichtquelle (21), die in Pulspausen der ersten Lichtsignale liegen über eine hinsichtlich ihrer Entfernung bekannte Strecke, wobei jedes dieser zweiten Lichtsignale jeweils aus zeitlich aufeinanderfolgenden Einschaltzeitabschnitten C und D besteht und die zweiten Lichtsignale mittels eines Phasenschiebers zeitlich zu den ersten Lichtsignale verschiebbar sind,
- einem Empfänger (13) zum Empfangen der ersten und der zweiten Lichtsignale
- Mitteln zum Ermitteln des aus den ersten und zweiten Lichtsignalen resultierenden Empfangssignals am Empfänger (13),
- Mitteln zum Aufteilen des Empfangssignals (S13) in die den Einschaltzeitabschnitten A, B, C und D entsprechenden Bereiche, mittels einer Torschaltung im Takt der Taktsteuerung (11)
- einem Vergleicher (15) zum taktweisen Vergleichen von jeweils einem, einem Einschaltzeitabschnitt B der ersten Lichtsignale mit jeweils einem einem Einschaltzeitabschnitt D der zweiten Lichtsignale entsprechenden, Empfangssignal zur Erzeugung eines Vergleichswerts am Ausgang eines Vergleichers (15),
- wenigstens einem Regler (18) der zur Regelung der Amplitudenwerte der ersten Lichtsignale und/ oder der zweiten Lichtsignale so verwendet wird, dass die den Einschaltzeitabschnitten B und D entsprechenden Abschnitte des Empfangssignals zumindest am Eingang des Vergleichers in ihrer Amplitude im Wesentlichen gleich groß sind,
- Mitteln zum taktweisen Erfassen eines ersten, während eines Einschaltzeitabschnitts A am Empfänger (13) empfangenen Taktwechselsignals (TW), und eines zweiten, während eines Einschaltzeitabschnitts C am Empfänger empfangenen Taktwechselsignals (TW), bei im Wesentlichen auf gleiche Amplitude am Eingang des Vergleichers (15) ausgeregelter Größe der den Einschaltzeitabschnitten B und D entsprechenden Abschnitte des Empfangssignals;
- einem weiteren Vergleicher (16) zum Bestimmen eines Differenzwerts (S16) durch Vergleich des ersten Taktwechselsignals (TW) mit dem zweiten Taktwechselsignal ihrer Amplitude nach,
- einem Phasenschieber (17) zum Verändern des Differenzwerts (S16) mittels einer Veränderung der Phasenverzögerung zwischen ersten und zweiten Lichtsignalen, bis der Differenzwert (S16) minimal, vorzugsweise Null wird;
- Mittel zum Bestimmen der Lichtlaufzeit durch Verwenden der bei minimalem Differenzwert eingetretenen Verzögerung des Phasenschiebers.

7. Vorrichtung nach Anspruch 6, **dadurch gekennzeichnet, dass** der Empfänger (13) eine teilweise, vorzugsweise an ihrem Rand (13b) lichtdicht beschichtete Photodiode ist.

8. Vorrichtung nach Anspruch 6 oder 7, **dadurch gekennzeichnet, dass** Umlenkmittel (25) vorgesehen sind, die die ersten Lichtsignale und die aus der ihrer Entfernung nach bekannten Strecke zweiten Lichtsignale, dem Empfänger (13) zuleiten und die die umgelenkten Lichtsignale so umlenken, dass die Lichtsignale im Wesentlichen parallel oder winkelgleich in den Empfänger (13) treffen.

9. Vorrichtung nach einem der Ansprüche 6 bis 8, **dadurch gekennzeichnet, dass** die wenigstens eine Lichtquelle (12) und/oder die Kompensationslichtquelle (21) zumindest teilweise durch LEDs gebildet sind.

## Claims

1. A method for light propagation time measurement, in particular for cameras (10), comprising the steps:
- sending a plurality of first light signals that are clocked by a clock pulse control (11) from at least one light source (12) into at least one light path (14) via a reflecting object (O) to at least one receiver (13) for the purposes of detecting a light propagation time or a change of the light propagation time of the first light signals in consequence of the approach, presence and/or distancing of the object (O), wherein each of these first light signals is comprised of timely consecutive switch-on time sections A and B,
- transmitting a plurality of second light signals, that are clocked by the clock pulse control (11) with the same clock and lie in pulse pauses of the first light signals, from a compensation light source (21) via a path which is known in regard to its distance, wherein each of these second light signals is comprised of timely consecutive switch-on time sections C and D and wherein the second light signals are displaceable in time relative to the first light signals via a phase shifter,
- receiving the first and the second light signals by means of at least one receiver (13),
- determining the received signal resulting from the first and the second light signals at the receiver (13),
- dividing the received signal (S13) into sections corresponding to the switch-on time sections A, B, C, D by means of a gate circuit at a clock rate of the clock pulse control (11),
- comparing the received signals of the first light signals each, corresponding to a switch-on time section B, with the second light signals each, corresponding to a switch-on time section D, in a clocked manner for generating a comparison value at the output of a comparator (15) which is used for the regulation of the amplitude values of the first light signals and/or the second light signals in such a way that sections of the received signals corresponding to the switch-on sections B and D are substantially of the same amplitude at least at the input of the comparator,
- detecting in a clocked manner a first clock pulse alternation signal (TW) received at the receiver (13) during a switch-on time section A and a second clock pulse alternation signal (TW) received at the receiver during a switch-on time section C when the magnitude of the sections of the received signal, corresponding to the switch-on time sections B and D have been regulated such as to be of substantially equal magnitude at the input of the comparator (15),
- determining a difference value (S16) by comparison of the first clock pulse alternation signal (TW) with the second clock pulse alternation signal in regard to the amplitudes thereof in a further comparator (16),
- changing the difference value (S16) by means of a phase shifter (17) for the purposes of changing the phase delay between the first and second light signals until the difference value (S16) becomes minimal, preferably zero,
- using the delay of the phase shifter occurring at the minimum difference value for the determination of the light propagation time.

2. A method according to claim 1, **characterized in that** the comparison value at the output of the comparator is at the same time used for regulating the amplitude values in such a way, that influences such as the reflection factor, stray light and temperature are compensated by regulating the signal (S15) at the output of the comparator (15) to a zero state by influencing the light output power of the at least one transmitter (12).

3. A method according to claim 1 or 2, **characterized in that** a photodiode partially coated preferably at its edge (13b) so as to be light-proof is used as receiver (13).

4. A method according to any of the preceding claims, **characterized in that** the first light signals and the second light signals, which likewise come from a second light path, are supplied to the receiver (13) via diverting means (25) which divert the diverted light signal in such a way that the light signals are incident on the receiver (13) substantially in parallel or at the same angle.

5. A method according to any of the preceding claims, **characterized in that** the determination of the light propagation time is used for distance measuring.

6. A device for light propagation time measurement, in particular for cameras (10), comprising:
- a clock pulse control (11)
- at least one light source (12) for sending a plurality of first light signals that are clocked by a clock pulse control (11) into at least one light path (14) via a reflecting object (O) to at least one receiver (13) for the purposes of detecting a light propagation time or a change of the light propagation time of the first light signals in consequence of the approach, presence and/or distancing of the object (O), wherein each of these first light signals is comprised of timely consecutive switch-on time sections A and B,
- means for transmitting a plurality of second light signals, that are clocked by the clock pulse control (11) with the same clock from a compensation light source (21) and lie in pulse pauses of the first light signals, via a path which is known in regard to its distance, wherein each of these second light signals is comprised of timely consecutive switch-on time sections C and D and wherein the second light signals are displaceable in time relative to the first light signals via a phase shifter,
- a receiver (13) for receiving the first and the second light signals,
- means for determining the received signal resulting from the first and the second light signals at the receiver (13),
- means for dividing the received signal (S13) into sections corresponding to the switch-on time sections A, B, C, D by means of a gate circuit at a clock rate of the clock pulse control (11),
- a comparator (15) for comparing the received signals of the first light signals each, corresponding to a switch-on time section B, with the second light signals each, corresponding to a switch-on time section D, in a clocked manner for generating a comparison value at the output of the comparator (15)
- at least one regulator (18) which is used for the regulation of the amplitude values of the first light signals and/or the second light signals in such a way that sections of the received signals corresponding to the switch-on sections B and D are substantial of the same amplitude at least at the input of the comparator,
- means for detecting in a clocked manner a first clock pulse alternation signal (TW) received at the receiver (13) during a switch-on time section A and a second clock pulse alternation signal (TW) received at the receiver during a switch-on time section C when the magnitude of the sections of the received signal, corresponding to the switch-on time sections B and D have been regulated such as to be of substantially equal magnitude at the input of the comparator (15),
- a further comparator (16) for determining a difference value (S16) by comparison of the first clock pulse alternation signal (TW) with the second clock pulse alternation signal in regard to the amplitudes thereof,
- a phase shifter (17) for changing the difference value (S16) by means of changing the phase delay between the first and second light signals until the difference value (S16) becomes minimal, preferably zero,
- means for determining the light propagation time in using the delay of the phase shifter occurring at the minimum difference value.

7. A device according to claim 6, **characterized in that** the receiver (13) is a photodiode partially coated preferably at its edge (13b) so as to be light-proof.

8. A device according to claims 6 or, **characterized in that** there are provided diverting means (25) which supply the first light signals and the second light signals, which are coming from a path of known distance, to the receiver (13) and which diverts the diverted light signal in such a way that the light signals are incident on the receiver (13) substantially in parallel or at the same angle.

9. A device according to any of the claims 6 to 8, **characterized in that** the at least one light source (12) and/or the compensation light source (21) are at least partly formed by LEDs.

## Revendications

1. Procédé de mesure du temps de propagation de la lumière, en particulier pour des caméras (10), comportant les étapes suivantes :
- envoi d'une pluralité de premiers signaux lumineux cadencés par un dispositif de commande de cadence (11) provenant d'au moins une source de lumière (12) dans au moins un trajet lumineux (14) par le biais d'un objet réfléchissant (O) à au moins un récepteur (13) pour l'enregistrement d'un temps de propagation de la lumière ou d'une modification du temps de propagation de la lumière des premiers signaux lumineux à la suite d'un rapprochement, d'une présence et/ou d'un éloignement de l'objet (O), chacun des ces premiers signaux lumineux consistant en des périodes d'activation A et B se succédant dans le temps,
- transmission d'une pluralité de deuxièmes signaux cadencés par le dispositif de commande de cadence (11) avec la même cadence, provenant d'une source de lumière de compensation (21) et qui se situent dans des pauses de pulsation des premiers signaux lumineux, au moyen d'un trajet dont l'éloignement est connu, chacun de ces deuxièmes signaux lumineux consistant en des périodes d'activation C et D se succédant dans le temps et les deuxièmes signaux lumineux pouvant être décalés temporellement par rapport aux premiers signaux lumineux au moyen d'un déphaseur,
- réception des premiers et deuxièmes signaux lumineux au moyen d'au moins un récepteur (13),
- détermination du signal de réception résultant des premiers et deuxièmes signaux lumineux au niveau du récepteur (13),
- division du signal de réception (S13) dans les zones correspondant aux périodes d'activation A, B, C et D, au moyen d'une porte analogique avec la cadence du dispositif de commande de cadence (11),
- comparaison cadencée de chaque signal de réception correspondant à une période d'activation B des premiers signaux lumineux avec chaque signal de réception correspondant à une période d'activation D des deuxièmes signaux lumineux, pour produire une valeur de comparaison à la sortie d'un comparateur (15), lequel est utilisé pour régler les valeurs d'amplitude des premiers signaux lumineux et/ou des deuxièmes signaux lumineux de telle sorte que les périodes du signal de réception correspondant aux périodes d'activation B et D aient des amplitudes sensiblement égales au moins à l'entrée du comparateur,
- enregistrement cadencé d'un premier signal de changement de cadence (TW) reçu pendant une période d'activation A au niveau du récepteur (13) et d'un deuxième signal de changement de cadence (TW) reçu pendant une période d'activation C au niveau du récepteur, avec une longueur des périodes du signal de réception correspondant aux périodes d'activation B et D réglée pour l'essentiel à la même amplitude à l'entrée du comparateur (15),
- détermination d'une valeur de différence (S16) par comparaison des amplitudes du premier signal de changement de cadence (TW) et du deuxième signal de changement de cadence dans un autre comparateur (16)
- modification de la valeur de différence (S16) au moyen d'un déphaseur (17) pour modifier le retard de phase entre les premiers et les deuxièmes signaux lumineux, jusqu'à ce que la valeur de différence (S16) devienne minimale, de préférence nulle,
- utilisation du retard du déphaseur obtenu avec la valeur de différence minimale pour déterminer le temps de propagation de la lumière.

2. Procédé selon la revendication 1, **caractérisé en ce que** la valeur de comparaison à la sortie du comparateur est utilisée en même temps pour le réglage des valeurs d'amplitude de sorte que les influences telles que le degré de réflexion, la lumière externe et la température sont compensés par un réglage du signal (S15) à la sortie du comparateur (15) à un état nul en agissant sur la puissance de la lumière de la source de lumière (12) au moins.

3. Procédé selon la revendication 1 ou 2, **caractérisé en ce qu'**on utilise en tant que récepteur (13) une photodiode partiellement recouverte, de préférence sur son bord (13b), d'une substance opaque.

4. Procédé selon l'une des revendications précédentes, **caractérisé en ce que** les premiers signaux lumineux et les seconds signaux lumineux, qui proviennent également d'un deuxième trajet lumineux, sont dirigés vers le récepteur (13) par des moyens de déviation (25) qui dévient les signaux lumineux déviés de telle sorte que les signaux lumineux arrivent dans le récepteur (13) de façon essentiellement parallèle ou avec un même angle.

5. Procédé selon l'une des revendications précédentes, **caractérisé en ce que** la détermination du temps de propagation de la lumière est utilisée pour le mesure de l'éloignement.

6. Dispositif pour la mesure du temps de propagation de la lumière, en particulier pour des caméras (10), comportant :
- un dispositif de commande de cadence (11),
- au moins une source de lumière (12) pour envoyer une pluralité de premiers signaux cadencés par un dispositif de commande de cadence (11) dans au moins un parcours lumineux (14) au moyen d'un objet réfléchissant (O) à au moins un récepteur (13) pour l'enregistrement d'un temps de propagation de lumière ou d'une modification du temps de propagation de lumière des premiers signaux lumineux à la suite d'un rapprochement, de la présence et/ou de l'éloignement de l'objet (0), chacun de ces premiers signaux lumineux consistant en des périodes d'activation A et B se suivant dans le temps,
- des moyens de transmission d'une pluralité de deuxièmes signaux lumineux cadencés par le dispositif de commande de cadence (11) avec la même cadence et provenant d'une source de lumière de compensation (21) et qui se trouvent dans les pauses de pulsation des premiers signaux lumineux, au moyen d'un parcours connu pour ce qui est de son éloignement, chacun de ces deuxièmes signaux lumineux consistant en des périodes d'activation C et D se suivant dans le temps et les deuxièmes signaux lumineux pouvant être décalés dans le temps par rapport aux premiers signaux lumineux au moyen d'un déphaseur,
- un récepteur (13) pour recevoir les premiers et deuxièmes signaux lumineux,
- des moyens pour diviser le signal de réception (S13) en les domaines correspondant aux périodes d'activation A, B, C et D, au moyen d'une porte analogique avec la cadence du dispositif de commande de cadence (11),
- un comparateur (15) pour comparer de façon cadencée chaque signal de réception correspondant à une période d'activation B des premiers signaux lumineux avec chaque signal de réception correspondant à une période d'activation D des deuxièmes signaux lumineux, pour produire une valeur de comparaison à la sortie du comparateur (15),
- au moins un régleur (18) qui est utilisé pour régler les valeurs d'amplitude des premiers signaux lumineux et/ou des deuxièmes signaux lumineux de telle sorte que les périodes du signal de réception correspondant aux périodes d'activation B et D aient des amplitudes sensiblement égales au moins à l'entrée du comparateur,
- des moyens pour enregistrer de façon cadencée un premier signal de changement de cadence (TW) reçu pendant une période d'activation A au niveau du récepteur (13), et un deuxième signal de changement de cadence (TW) reçu pendant une deuxième période d'activation C au niveau du récepteur, avec une longueur des périodes du signal de réception correspondant aux périodes d'activation B et D réglée essentiellement à la même amplitude à l'entrée du comparateur (15),
- un autre comparateur (16) pour déterminer une valeur de différence (S16) par comparaison du premier signal de changement de cadence (TW) avec le deuxième signal de changement de cadence d'après leur amplitude,
- un déphaseur (17) pour modifier la valeur de différence (S16) au moyen d'une modification du retard de phase entre les premiers et deuxièmes signaux lumineux, jusqu'à ce que la valeur de différence (S16) soit minimale, de préférence nulle ;
- des moyens pour déterminer le temps de propagation de la lumière en utilisant le retard du déphaseur obtenu avec la valeur de différence minimale.

7. Dispositif selon la revendication 6, **caractérisé en ce que** le récepteur (13) est une photodiode recouverte, de préférence sur son bord (13b), d'une couche opaque.

8. Dispositif selon la revendication 6 ou 7, **caractérisé en ce que** des moyens de déviation (25) sont prévus, lesquels dirigent les premiers signaux lumineux et les deuxièmes signaux lumineux connus d'après leur éloignement vers le récepteur (13) et dévient les signaux lumineux déviés de telles sorte qu'ils rencontrent les signaux lumineux de façon essentiellement parallèle ou avec le même angle dans le récepteur (13).

9. Dispositif selon l'une des revendications 6 à 8, **caractérisé en ce que** la source de lumière (12) au moins et/ou la source de lumière de compensation (21) sont formées au moins partiellement de DEL (diodes électroluminescentes).
